(19) Europäisches Patentamt
European Patent Office
Office européen des brevets

(11) **EP 1 154 445 A2**

(12) **EUROPEAN PATENT APPLICATION**

(43) Date of publication:
**14.11.2001 Bulletin 2001/46**

(51) Int Cl.[7]: **H01F 1/057**, C22C 1/04,
C22C 38/00

(21) Application number: **01111584.7**

(22) Date of filing: **11.05.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **12.05.2000 JP 2000144616**

(71) Applicants:
• **ISUZU MOTORS LIMITED**
**Shinagawa-ku, Tokyo (JP)**
• **Tsinghua University**
**Beijing (CN)**

(72) Inventors:
• **Mutsuo, Nishimoto**
**Kawasaki-shi, Kanagawa (JP)**
• **Tohru, Kuwahara**
**Kawasaki-shi, Kanagawa (JP)**

• **Ken, Kurabayashi**
**Shinagawa-ku, Tokyo (JP)**
• **Atsushi, Mikoshiba**
**Shinagawa-ku, Tokyo (JP)**
• **Zhongliang, Jiang**
**Hai Diang District, Bejing (CH)**
• **Yang, Changping**
**Hai Diang District, Bejing (CH)**
• **Chen, Xiuyun**
**Hai Diang District, Bejing (CH)**
• **Ma, Chumlai, Southeast Community**
**Hai Diang District, Bejing (CH)**
• **Zhu, Jing**
**Hai Diang District, Bejing (CH)**

(74) Representative: **Schaumburg, Thoenes & Thurn**
**Postfach 86 07 48**
**81634 München (DE)**

(54) **Alloy for high-performance rare earth permanent magnet and manufacturing method thereof**

(57)     The present invention is directed to an alloy for a high-performance rare earth permanent magnet. This alloy has a metallographic structure of approximately two phases that comprises a $Nd_2Fe_{14}B$ phase (1) consisting of hard magnetic crystal grains and an $\alpha$-Fe phase (2) consisting of soft magnetic crystal grains. The metallographic structure has an ultra-thin film (3) that contains a large amount of nonmagnetic metallic elements that have an atomic radius of between the atomic radius of Fe and the atomic radius of Nd at each of the crystal grain boundaries between the phases (1, 2) and that will not form solid solutions with either Fe or Nd. The nonmagnetic metallic elements consist of one or two or more elements selected from among Nb, Zr, Ta and Hf, the thickness of each ultra-thin film is 10 to 20 angstroms, and the sizes of the crystal grains in each of the phases (1, 2) are in the range 5 to 100nm, preferably 10 to 40nm.

FIG. 1

**Description**

The present invention relates to an alloy for a high-performance rare earth permanent magnet and a manufacturing method for this alloy, and more particularly to an alloy for a high-performance rare earth permanent magnet used in an automobile retarder, a motor, a generator or the like and a manufacturing method for this alloy.

In recent years, there have been heightened calls to make magnets higher in performance and lower in price, and Nd-Fe-B alloys, which make use of Nd, a relatively cheap rare earth element, have become widely used as alloys for high-performance rare earth permanent magnets.

There are various methods of manufacturing Nd-Fe-B alloys, but these can be broadly classified into two main types.

The first type of manufacturing method is a powder metallurgical sintering method (see for example Japanese Patent Application Laid-open No. 59-46008). In this method, an ingot that has been formed through melting and casting is pulverized to produce a powder, and this powder is then subjected to molding, sintering and aging treatment in that order. The molding is carried out while applying a magnetic field, meaning that an anisotropic magnet is obtained. However, if this magnet is made into a powder, then good magnetic coercivity is not obtained, and so the magnet can only be used as a bulked magnet and not as a bonded magnet.

The second type of manufacturing method is a rapid quenching method (see for example Japanese Patent Application Laid-open No. 59-64739). In this method, a molten alloy is squirted onto a rapidly rotating copper or iron roller, whereupon the molten alloy is quenched at an extremely high cooling rate of $10^{5 \circ}$C/sec or more, and an alloy in which amorphous regions and microcrystals are intermingled is obtained. By selecting a suitable cooling rate, or by quenching rapidly and then carrying out suitable heat treatment, an alloy having high coercivity can be obtained. The alloy is obtained in the form of an isotropic ribbon, and is then pulverized into a powder, mixed with a resin, and used as a bonded magnet. Alternatively, it is also possible to hot press the alloy powder to form a bulked material, or to manufacture an anisotropic bulked material by using the so-called 'die upset' technique (see Japanese Patent Application Laid-open No. 60-100402).

The magnets obtained through the above-mentioned methods all have a structure in which an Nd-rich nonmagnetic alloy layer is crystallized at the interfaces of a $Nd_2Fe_{14}B$ compound that exhibits ferromagnetism on account of the metallographic structure thereof. That is, these magnets are all obtained from a composition that contains excess Nd relative to the standard composition $Nd_2Fe_{14}B$, and the presence of an Nd-rich layer is a primary factor in high coercivity being exhibited.

However, the magnetic properties of these magnets depend on the magnetism of only the compound $Nd_2Fe_{14}B$, and so it is theoretically impossible to obtain a high-performance magnet having properties better than the compound $Nd_2Fe_{14}B$.

With the aim of obtaining magnets that have properties better than the compound $Nd_2Fe_{14}B$, improved performance magnets in which a high-coercivity (ferromagnetic) hard phase (hard magnetic crystal grains) and a high-saturation-magnetic-flux soft phase (soft magnetic crystal grains) are exchange coupled have thus been developed, specifically two-phase alloy nanocomposite magnets (or exchange spring magnets) that use a $Nd_2Fe_{14}B$ phase as a hard phase and an $Fe_3B$ phase as a soft phase. However, with such a $Nd_2Fe_{14}B/Fe_3B$ two-phase alloy nanocomposite magnet, if one tries to obtain high coercivity, then the residual magnetic flux density drops and it is not possible to satisfy the requirements of a high-performance magnet.

There are also improved performance two-phase alloy nanocomposite magnets in which a $Nd_2Fe_{14}B$ phase is used as the hard phase and an $\alpha$-Fe phase is used as the soft phase. $\alpha$-Fe has the best magnetization properties of any single element.

Laboratory examples of such $Nd_2Fe_{14}B/\alpha$-Fe two-phase alloy nanocomposite magnets include Nd-Fe-Co-Zr-B/$\alpha$-Fe (J. Alloy & Compounds, 230 (1995), L1-L3) and Nd-Fe-Co-Al-Cr-B/$\alpha$-Fe (J. Magnetism & Magnetic Materials, 208 (2000), 163-168). Moreover, $Nd_2Fe_{14}B/\alpha$-Fe two-phase alloy nanocomposite magnets that comprise an alloy powder manufactured through a rapid quenching method include Nd-Fe-B/$\alpha$-Fe and R-Nd-Fe-Co-M-B/$\alpha$-Fe (where R is a rare earth element and M is a transition metal) (see Japanese Patent Application Laid-open No. 8-162312 and Japanese Patent Application Laid-open No. 11-288807).

However, with the above-mentioned Nd-Fe-Co-Zr-B/$\alpha$-Fe and Nd-Fe-Co-Al-Cr-B/$\alpha$-Fe alloys, an Nd compound and $\alpha$-Fe are mixed together and then alloying is carried out using a mechanical alloying method, meaning that a ball mill is required and the alloying takes tens to hundreds of hours, making mass production difficult. Furthermore, the performance of a magnet produced by bulking the alloy is not sufficient for the magnet to be used as a high-performance magnet.

Moreover, the metallographic structures of the above-mentioned Nd-Fe-B/$\alpha$-Fe and R-Nd-Fe-Co-M-B/$\alpha$-Fe alloys are three-phase structures in which a $Nd_2Fe_{14}B$ phase 81 and an $\alpha$-Fe phase 82 are precipitated as islands in an amorphous phase 80, as shown in Fig. 8. The high-coercivity $Nd_2Fe_{14}B$ phase 81 and the high-saturation-magnetic-flux $\alpha$-Fe phase 82 are thus separated from one another, meaning that the exchange interaction between the high-

coercivity $Nd_2Fe_{14}B$ phase 81 and the $\alpha$-Fe phase 82 is not sufficiently utilized.

With the foregoing in view, it is an object of the present invention to provide an alloy for a high-performance rare earth permanent magnet, wherein this alloy has an approximately two-phase metallographic structure comprising a $Nd_2Fe_{14}B$ phase and an $\alpha$-Fe phase, along with a manufacturing method for this alloy.

According to one embodiment of the present invention, the metallographic structure is made to be an approximately two-phase structure that comprises a $Nd_2Fe_{14}B$ phase consisting of hard magnetic crystal grains and an $\alpha$-Fe phase consisting of soft magnetic crystal grains, so that the metallographic structure becomes an almost completely two-phase structure comprising a high-coercivity $Nd_2Fe_{14}B$ phase and a high-saturation-magnetic-flux $\alpha$-Fe phase, with the $Nd_2Fe_{14}B$ phase crystal grains and the $\alpha$-Fe phase crystal grains being in close proximity to one another, meaning that the exchange interaction between the $Nd_2Fe_{14}B$ phase and the $\alpha$-Fe phase can be sufficiently utilized, and an alloy for a high-performance rare earth permanent magnet having excellent magnetic properties can be obtained. Moreover, ultra thin films that contain a large amount of nonmagnetic metallic element(s), i.e. fourth element (s), with the atomic radius being between the atomic radius of Fe and the atomic radius of Nd, and that are difficult to form solid solutions with either Fe or Nd are made to be formed at each of the crystal grain boundaries of the two-phase metallographic structure comprising a $Nd_2Fe_{14}B$ phase and an $\alpha$-Fe phase, meaning that an alloy for a high-performance rare earth permanent magnet can be obtained for which the exchange interaction between the $Nd_2Fe_{14}B$ phase and the $\alpha$-Fe phase is further utilized, and at the same time the coercivity is increased.

According to another embodiment of the present invention, in an alloy for a high-performance rare earth permanent magnet comprising a $Nd_2Fe_{14}B$ phase consisting of hard magnetic crystal grains and an $\alpha$-Fe phase consisting of soft magnetic crystal grains, the component proportions are made to be: 6.125 to 11.6 (not including 11.6) at% of Nd; a total of 0.2 to 1.3 at% of one or more nonmagnetic metallic elements selected from among Nb, Zr, Ta and Hf; a total of 4.0 to 5.8 (not including 5.8) at% of B and C, with the amount of C being 0 to 0.5 at%; and the remainder Fe; and the component ratio of the above-mentioned Nd to the above-mentioned B is in the range 1.75:1 to 2.25:1. As a result, the alloy composition is on or close to the $Nd_2Fe_{14}B$ + $\alpha$-Fe two-phase line in the Nd-Fe-B ternary phase diagram, meaning that an alloy for a high-performance rare earth permanent magnet having excellent magnetic properties can be obtained.

Moreover, according to another embodiment of the present invention, in an alloy for a high-performance rare earth permanent magnet, comprising a $Nd_2Fe_{14}B$ phase consisting of hard magnetic crystal grains and an $\alpha$-Fe phase consisting of soft magnetic crystal grains, the component proportions are made to be: 7.0 to 11.6(not including 11.6) at% of Nd; 0.50 to 1.00 at% of Nb; 4.0 to 5.8 (not including 5.8) at% of B; and the remainder Fe; the component ratio of the above-mentioned Nd to the above-mentioned B is 2:1, and the sizes of the crystal grains in each of the above-mentioned phases are in the range 5 to 100nm, preferably 10 to 40nm. As a result, the alloy composition is on the $Nd_2Fe_{14}B$ + $\alpha$-Fe two-phase line in the Nd-Fe-B ternary phase diagram, and moreover the crystals in each of the phases are minute, meaning that an alloy for a high-performance rare earth permanent magnet having excellent magnetic properties can be obtained.

Moreover, according to another embodiment of the present invention, a method of manufacturing an alloy for a high-performance rare earth permanent magnet, comprising a $Nd_2Fe_{14}B$ phase consisting of hard magnetic crystal grains and an $\alpha$-Fe phase consisting of soft magnetic crystal grains, comprises the steps of: preparing a molten alloy, in which the component proportions are: 6.125 to 11.6 (not including 11.6) at% of Nd; a total of 0.2 to 1.3 at% of one or more nonmagnetic metallic elements selected from among Nb, Zr, Ta and Hf; a total of 4.0 to 5.8 (not including 5.8) at% of B and C, with the amount of C being 0 to 0.5 at%; and the remainder Fe; and the component ratio of the above-mentioned Nd to the above-mentioned B is in the range 1.75:1 to 2.25:1; then, quenching the molten alloy at a rate of at least $10^4$°C/sec to form a quenching-solidified alloy body; then, subjecting the quenching-solidified alloy body to heat treatment for at least 13 minutes, preferably at least 15 minutes, at a temperature of 640 to 750°C, preferably 650 to 740°C, more preferably 660 to 730°C, whereby an approximately two-phase metallographic structure comprising the above-mentioned $Nd_2Fe_{14}B$ phase and the above-mentioned $\alpha$-Fe phase is produced, and an ultra-thin film containing a large amount of the above-mentioned nonmagnetic metallic elements is formed at each of the crystal grain boundaries between the phases. As a result, an alloy for a high-performance rare earth permanent magnet, wherein this alloy has an approximately two-phase metallographic structure comprising a $Nd_2Fe_{14}B$ phase and an $\alpha$-Fe phase and has excellent magnetic properties, can be reliably obtained.

Moreover, according to another embodiment of the present invention, a high-performance bonded magnet, bulked magnet or anisotropic bulked magnet having excellent magnetic properties can be obtained by using an alloy for a high-performance rare earth permanent magnet, with this alloy being obtained through the above-mentioned method of manufacturing an alloy for a high-performance rare earth permanent magnet.

Fig. 1 is a schematic drawing of the metallographic structure of an alloy for a high-performance rare earth permanent magnet according to the present invention;
Fig. 2 is a Nd-Fe-B ternary phase diagram;

Fig. 3 is a differential thermal analysis diagram of a quenching-solidified body;

Fig. 4(a) is a diagram showing the X-ray diffraction pattern of a quenching-solidified body before heat treatment;

Fig. 4(b) is a diagram showing the X-ray diffraction pattern of a quenching-solidified body after heat treatment;

Fig. 5 is an electron micrograph of a quenching-solidified body after heat treatment;

Fig. 6 is a schematic drawing of a melt spinning machine;

Fig. 7 is a diagram showing how heat treatment time affects magnetic properties; and

Fig. 8 is a schematic drawing of the metallographic structure of a conventional two-phase alloy nanocomposite magnet.

Following is a description of preferred embodiments of the present invention with reference to the drawings.

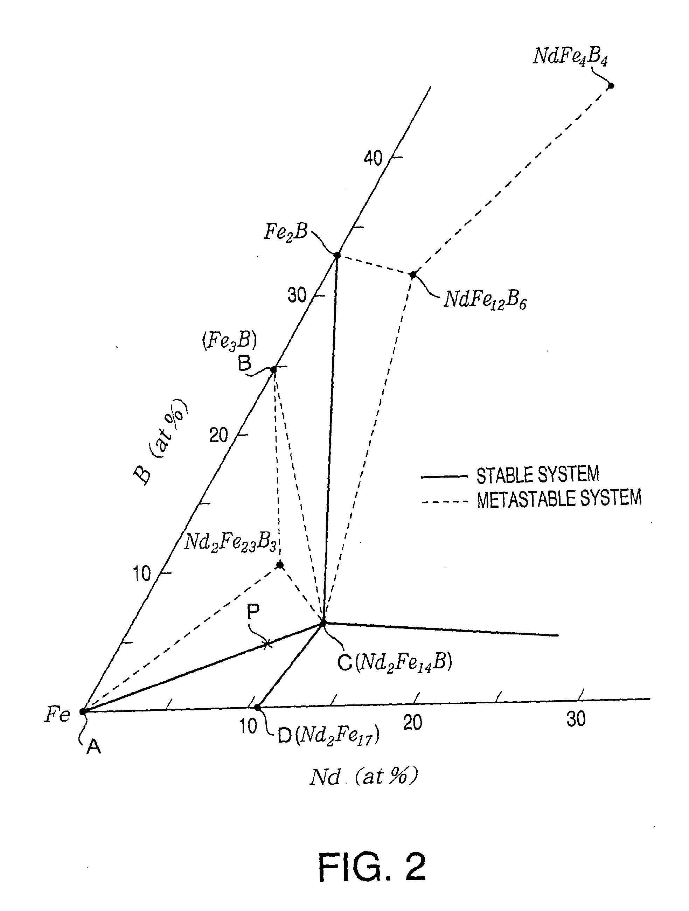

The inventors of the present invention conducted various studies with an object of obtaining an alloy for a $Nd_2Fe_{14}B/\alpha Fe$ two-phase alloy nanocomposite magnet, wherein this alloy has a metallographic structure comprising only two phases, namely an $Nd_2Fe_{14}B$ phase, which is a hard phase, and an $\alpha$-Fe phase, which is a soft phase, and as a result discovered that such a two-phase metallographic structure is realized only when the alloy composition lies on the line AC in the Nd-Fe-B ternary phase diagram shown in Fig. 2.

With a composition lying within the triangle ABC in Fig. 2, a nonmagnetic $Nd_2Fe_{23}B_3$ phase precipitates at an intermediate stage, but this $Nd_2Fe_{23}B_3$ phase ultimately decomposes and an $\alpha$-Fe + $Nd_2Fe_{14}B$ + $Fe_3B$ three-phase structure is formed. Moreover, with a composition lying within the triangle ACD in Fig. 2, an $\alpha$-Fe + $Nd_2Fe_{14}B$ + $Nd_2Fe_{17}$ three-phase structure is formed. Note that in Fig. 2, full lines represent stable systems, while dashed lines represent metastable systems.

Here, the composition ratio $\alpha$-Fe:$Nd_2Fe_{14}B$ for a point P on the line AC representing a two-phase structure is equal to the ratio PC:AP. A formula representing the compositions on the line AC in terms of atomic percentages is:

$$Nd_{2X}Fe_{100-3X}B_X \ (3.5 \leqq X < 5.8) \tag{1}$$

However, with such a composition, it is not possible to obtain a completely two-phase structure comprising a $Nd_2Fe_{14}B$ phase and an $\alpha$-Fe phase, and so it is necessary to add a fourth element to promote the formation of such a two-phase structure.

After conducting various studies, it was discovered that a nonmagnetic metallic element that has an atomic radius between Fe and Nd and tends not to form solid solutions with either Fe or Nd may be used as this fourth element. A specific example is one or more metallic elements selected from the group consisting of Nb, Zr, Ta and Hf; using Nb on its own is particularly effective.

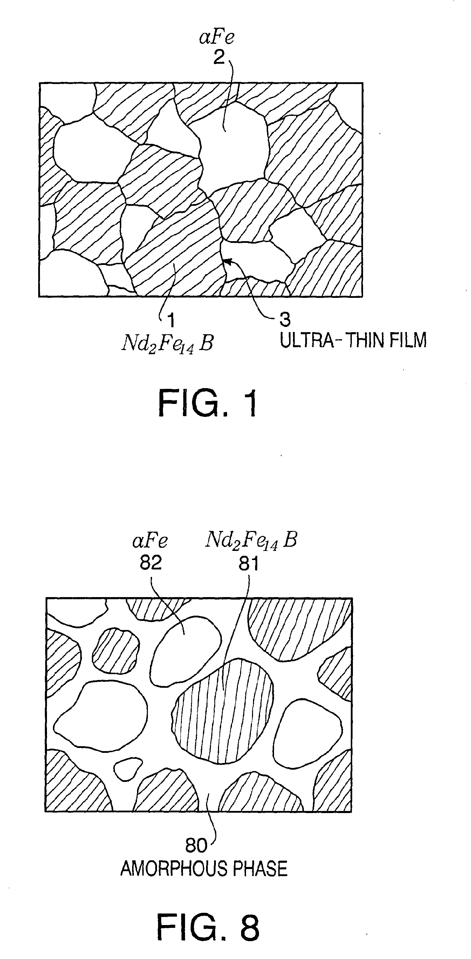

The one or more nonmagnetic metallic elements selected from the group consisting of Nb, Zr, Ta and Hf tend(s) not to form a solid solution with $\alpha$-Fe, and so is/are swept to the outside as the $\alpha$-Fe grows. However, diffusion of the nonmagnetic metallic element(s) through the $\alpha$-Fe is slow, and so the $\alpha$-Fe cannot grow sufficiently, resulting in a stable nanocrystalline structure. Moreover, as shown in Fig. 1, ultra-thin films 3 containing a large amount of the nonmagnetic metallic element(s) along with Fe and B are formed at each of the crystal grain boundaries in the two-phase metallographic structure consisting of a $Nd_2Fe_{14}B$ phase 1 and an $\alpha$-Fe phase 2. These ultra-thin films 3 contain $\alpha$-Fe and thus exhibit soft magnetic properties, and moreover bring about an exchange interaction (spring effect) which produces resistance to external magnetization, leading to an improvement in coercivity. If these ultra-thin films 3 were not present, then the resistance to external magnetization would be weak and the coercivity would merely be an average of the coercivity of the $Nd_2Fe_{14}B$ phase 1 and the $\alpha$-Fe phase 2. In order to make the most of the exchange interaction, it is preferable for the ultra-thin films 3 to be as thin as possible, specifically 10 to 20 angstroms, preferably around 15 angstroms. The amount added of the nonmagnetic metallic element(s) is thus stipulated to be 0.2 to 1.3 at%, preferably around 0.5 to 1 at%.

Moreover, it was also discovered that, if C - which has properties similar to B - is added in place of B, then there is little drop in magnetic properties, and in fact the coercivity can actually be slightly improved. However, the amount of C added is made to be in the range 0 to 0.5 at%. According to formula (1), the standard Nd:B ratio is 2:1, but since the addition of C is permitted, the actual Nd:B ratio is in the range 1.75:1 to 2.25:1.

Furthermore, in order to obtain a high coercivity, it is necessary to strengthen the exchange coupling in the two-phase alloy nanocomposite magnet, and to suppress magnetization reversal in the $\alpha$-Fe phase by means of the high magnetic anisotropy of the $Nd_2Fe_{14}B$ phase. An effective way of doing this is to increase the area of contact between the $Nd_2Fe_{14}B$ phase and the $\alpha$-Fe phase, i.e. to make the crystal grains for each of the two phases have a size of 5 to 100nm, preferably 10 to 40nm.

In view of the above, from a structural standpoint, the alloy for a high-performance rare earth permanent magnet of the present application is made to have an approximately two-phase metallographic structure that comprises

a $Nd_2Fe_{14}B$ phase 1 and an $\alpha$-Fe phase 2, with ultra-thin films 3 at each of the crystal grain boundaries between the two phases, wherein the ultra-thin films 3 have a thickness of 10 to 20 angstroms - preferably around 15 angstroms - and contain a large amount of one or more nonmagnetic metallic elements selected from the group consisting of Nb, Zr, Ta and Hf, and wherein the sizes of the crystal grains in each of the two phases are 5 to 100nm, preferably 10 to 40nm.

Moreover, from a compositional standpoint, the alloy for a high-performance rare earth permanent magnet of the present application comprises a $Nd_2Fe_{14}B$ phase 1 consisting of hard magnetic crystal grains and an $\alpha$-Fe phase 2 consisting of soft magnetic crystal grains, wherein the component proportions in the alloy are made to be: 6.125 to 11.6(not including 11.6) at% of Nd; a total of 0.2 to 1.3 at% of one or more nonmagnetic metallic elements selected from among Nb, Zr, Ta and Hf, preferably Nb only; a total of 4.0 to 5.8(not including 5.8) at% of B and C, with the amount of C being 0 to 0.5 at%, preferably B only; and the remainder Fe; wherein the component ratio of Nd to B is in the range 1.75:1 to 2.25:1, preferably 2:1; and wherein the sizes of the crystal grains in each of the phases are 5 to 100nm, preferably 10 to 40nm.

With the alloy for a high-performance rare earth permanent magnet of the present invention, by stipulating the compositional range as above, the metallographic structure becomes an almost completely two-phase structure comprising a $Nd_2Fe_{14}B$ phase having a high coercivity and an $\alpha$-Fe phase having a high saturation magnetic flux, with the $Nd_2Fe_{14}B$ phase crystal grains and the $\alpha$-Fe phase crystal grains being in close proximity to one another, meaning that the exchange interaction between the phases can be brought into more-or-less full play. In other words, the coercivity can be made virtually as high as possible while continuing to utilize the good magnetization properties of the $\alpha$-Fe phase, and so an alloy for a high-performance rare earth permanent magnet having excellent magnetic properties can be obtained.

Moreover, by adding, as a fourth element, one or more nonmagnetic metallic elements selected from the group consisting of Nb, Zr, Ta and Hf in an amount in the above-mentioned range, ultra-thin films containing a large amount of the nonmagnetic metallic element(s) are formed at each of the crystal grain boundaries between the $Nd_2Fe_{14}B$ phase and the $\alpha$-Fe phase, meaning that the coercivity is raised still further.

Furthermore, by stipulating the sizes of the crystal grains of each of the $Nd_2Fe_{14}B$ phase and the $\alpha$-Fe phase to be within the above-mentioned range, the area of contact between the two phases is increased, meaning that the coercivity is raised even further.

In addition, the alloy of the present invention is an Nd-Fe-Nb-B alloy and does not contain Co. The conventional alloy disclosed in Japanese Patent Application Laid-open No. 11-288807, on the other hand, is an Nd-Fe-Co-M-B alloy, having Co as an essential component. The raw material cost of Co is about the same as that of Nd, being high at about 10 times or more the raw material cost of Fe, Nb or the like. Such a conventional Nd-Fe-Co-M-B alloy is thus expensive. Because the alloy of the present invention does not contain Co, the production cost is lower than that of a conventional Nd-Fe-Co-M-B alloy.

Following is a description of a method of manufacturing the alloy for a high-performance rare earth permanent magnet of the present invention.

Firstly, an alloy raw material is obtained by weighing out raw materials for each of the component elements so that the proportions are as follows: 6.125 to 11.6(not including 11.6) at% of Nd; a total of 0.2 to 1.3 at% of one or more nonmagnetic metallic elements selected from among Nb, Zr, Ta and Hf, preferably Nb only; a total of 4.0 to 5.8 (not including 5.8) at% of B and C, with the amount of C being 0 to 0.5 at%, preferably B only; and the remainder Fe; wherein the component ratio of Nd to B is in the range 1.75:1 to 2.25:1, preferably 2:1.

Next, this alloy raw material is heated, thus producing a molten alloy. Droplets of the molten alloy are then produced using an inert gas (for example Ar gas) or the like, and these droplets are made to collide with a rotating cooling body, whereupon the droplets are quenched at a rate of at least $10^{4\circ}$C/sec, forming a ribbon-like quenching-solidified alloy body.

The quenching-solidified alloy body is then subjected to heat treatment for at least 13 minutes, preferably at least 15 minutes, at a temperature of 640 to 750°C, preferably 650 to 740°C, more preferably 660 to 730°C.

As a result, an alloy body having an approximately two-phase metallographic structure comprising a $Nd_2Fe_{14}B$ phase and an $\alpha$-Fe phase is obtained, with the sizes of the crystals in each of the phases being 5 to 100nm, preferably 10 to 40nm. Moreover, ultra-thin films are formed at each of the crystal grain boundaries between the two phases in the alloy body, wherein these ultra-thin films have a thickness of 10 to 20 angstroms - preferably around 15 angstroms - and contain a large amount of the nonmagnetic metallic element(s).

The alloy body obtained is pulverized as appropriate. The powder thus obtained can be mixed with a resin, thus obtaining a bonded magnet. Alternatively, the powder can be subjected to hot pressing, thus obtaining a bulked material. Alternatively, an anisotropic bulked material can be obtained from the powder by using a die upset method.

There are no particular limitations on the method for cooling at a rate of at least $10^{4\circ}$C/sec - for example, a rapid quenching method conventionally used in industry can be used. By quenching the droplets of the molten alloy at a rate of at least $10^{4\circ}$C/sec, a ribbon-like quenching-solidified body having an amorphous structure of the above-mentioned composition can be obtained, or by controlling the cooling rate, minute $\alpha$-Fe crystals can be made to form within the structure. The ribbon-like quenching-solidified body is subsequently subjected to heat treatment, thus obtaining a two-phase structure comprising a $Nd_2Fe_{14}B$ phase and an $\alpha$-Fe phase.

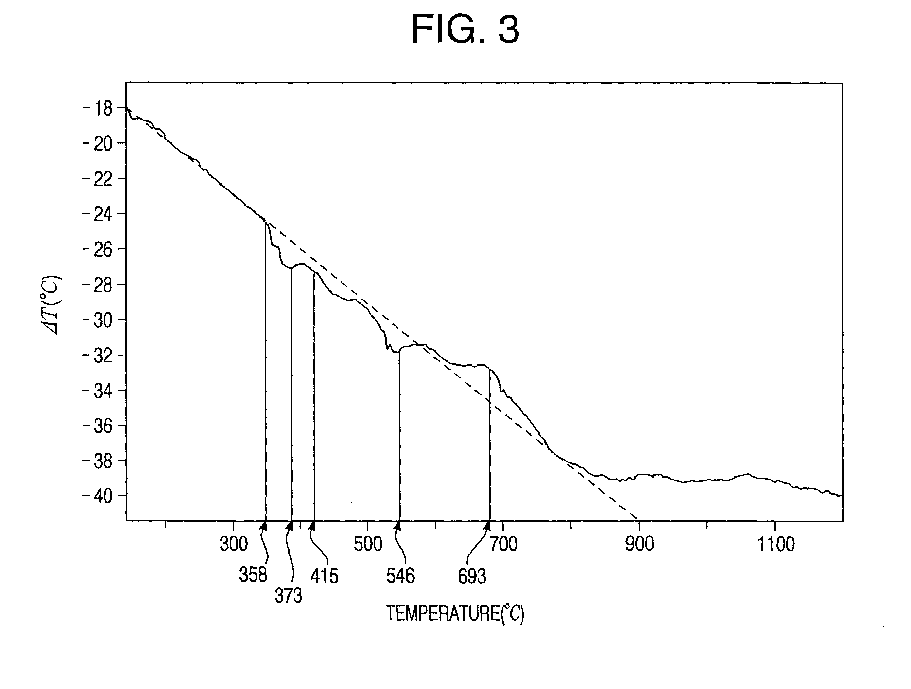

Differential thermal analysis was performed on a ribbon-like quenching-solidified body so obtained. The results are shown in Fig. 3. In Fig. 3, the vertical axis shows the differential temperature $\Delta T$ ($^\circ$C), and the horizontal axis shows the heating temperature ($^\circ$C).

It can be seen from Fig. 3 that the ribbon-like quenching-solidified body of the above-mentioned composition has a Curie point at about 373$^\circ$C, exhibits a crystallization reaction at about 546$^\circ$C, and exhibits a phase transformation (in which the $Nd_2Fe_{14}B$ phase and the $\alpha$-Fe phase are produced) at about 693$^\circ$C. It can thus be inferred that the heat treatment temperature should preferably be around 693$^\circ$C.

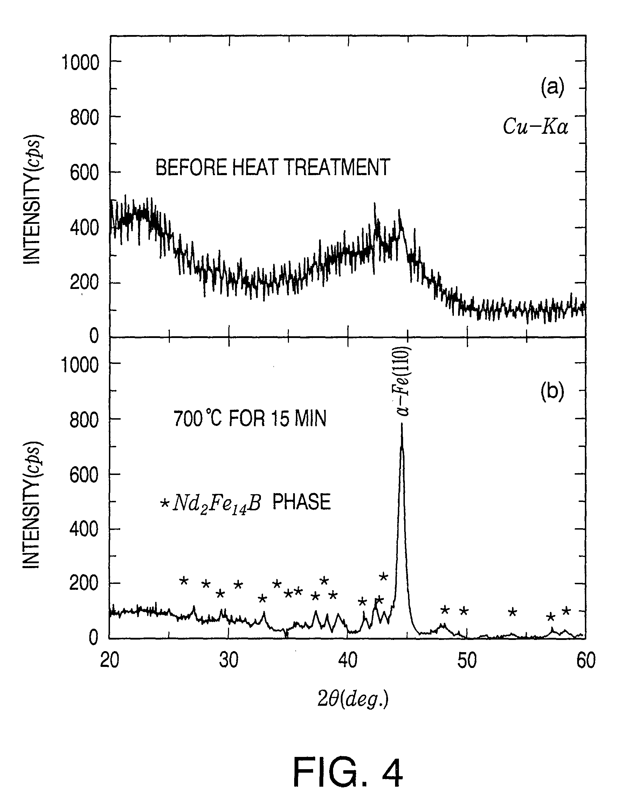

In order to verify that a phase transformation takes place at about 693$^\circ$C, X-ray diffraction was carried out on the quenching-solidified body both before and after heat treatment. Fig. 4(a) shows the X-ray diffraction pattern of the quenching-solidified body before heat treatment, while Fig. 4(b) shows the X-ray diffraction pattern of the quenching-solidified body after carrying out heat treatment at 700$^\circ$C for 15 minutes. In Figs. 4(a) and (b), the vertical axis shows the intensity (cps), and the horizontal axis shows 2$\theta$ (deg), where $\theta$ is the angle of incidence.

It can be seen from Fig. 4(a) that a broad diffraction pattern is obtained for the quenching-solidified body before heat treatment, from which it can be inferred that the quenching-solidified body before heat treatment has an amorphous single-phase structure. It can be seen from Fig. 4(b), on the other hand, that the diffraction pattern for the quenching-solidified body after heat treatment at 700$^\circ$C for 15 minutes has a strong peak corresponding to $\alpha$-Fe and is otherwise more-or-less flat, from which it can be inferred that the structure has become a two-phase structure comprising a $Nd_2Fe_{14}B$ phase and an $\alpha$-Fe phase. This verifies that a phase transformation from an amorphous structure to a two-phase structure comprising a $Nd_2Fe_{14}B$ phase and an $\alpha$-Fe phase takes place upon carrying out heat treatment at 700$^\circ$C for 15 minutes.

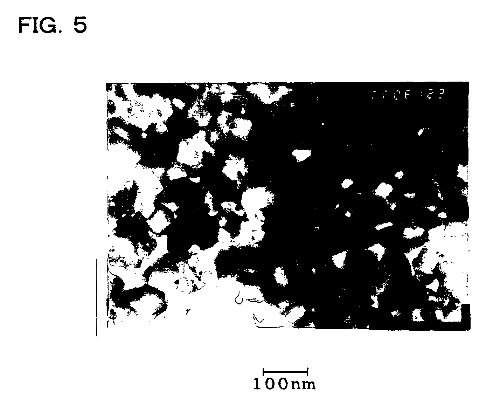

Moreover, when the quenching-solidified body after heat treatment was observed using a transmission electron microscope, a two-phase metallographic structure comprising a $Nd_2Fe_{14}B$ phase and an $\alpha$-Fe phase was observed as shown in Fig. 5, with the crystals in each of the phases being minute, specifically having sizes of about 10 to 40nm.

With the manufacturing method of the present invention, the cooling rate of the molten alloy, and the temperature and time of the heat treatment to which the quenching-solidified body obtained through this cooling is subjected, are stipulated to be in the above-mentioned ranges. As a result, an alloy having an almost completely two-phase metallographic structure comprising a $Nd_2Fe_{14}B$ phase and an $\alpha$-Fe phase, and having ultra-thin films containing a large amount of the above-mentioned nonmagnetic metallic element(s) at each of the crystal grain boundaries between the two phases, can be reliably obtained, and moreover the sizes of the crystals in the two phases of the alloy are of the order of a few tens of nanometer.

Following is a description of examples with reference to the drawings.

(Example 1)

Nd, Fe, Nb and Fe-B were used as raw materials, with these raw materials being weighed out such that the alloy composition would become $Nd_9Fe_{85.5}Nb_{1.0}B_{4.5}$. Arc melting of the raw materials was then carried out in an argon gas atmosphere, and an ingot of diameter 8 to 12mm and length 50 to 200mm was cast.

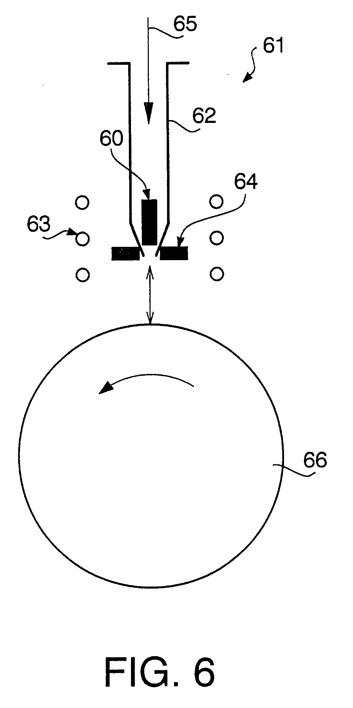

This ingot 60 was then placed in a quartz nozzle 62 (outside diameter 12mm, bore diameter at nozzle tip 0.3 to 0.6mm) of a melt spinning machine 61, as shown in Fig. 6. The nozzle tip of the quartz nozzle 62 was placed into the internal hole of a carbon ring 64. Moreover, a high frequency coil 63 running around the quartz nozzle 62 and the carbon ring 64 was provided at the bottom of the quartz nozzle 62.

The quartz nozzle 62 was then heated using the high frequency coil 63, and at 1400$^\circ$C the ingot 60 melted. The resulting molten alloy was squirted out of the tip of the quartz nozzle 62 using Ar gas 65 at an ejecting pressure of $1.2 \times 10^5$ to $2.0 \times 10^5$ Pa, thus producing droplets of the molten alloy. In an argon gas atmosphere these droplets were made to collide with the surface of a copper roller 66 of outside diameter 250mm rotating at a peripheral speed of 15m/sec, whereupon the droplets were quenched and solidified. In this way, a ribbon-like quenching-solidified body of thickness approximately 30$\mu$m was obtained.

Quenching-solidified bodies produced in this way were kept at a prescribed temperature (600$^\circ$C for Sample 1, 650$^\circ$C for Sample 2, 700$^\circ$C for Sample 3, 750$^\circ$C for Sample 4, and 800$^\circ$C for Sample 5) for 15 minutes in a vacuum furnace at a reduced pressure of $5.0 \times 10^{-3}$ to $1.0 \times 10^{-4}$ Pa and then cooled to room temperature, thus producing Samples 1 to 5 shown in Table 1.

Magnetic properties were then evaluated for each sample using a VSM (vibrating sample magnetometer). The magnetic properties evaluated were the saturation magnetic flux density ($J_s$) the residual magnetic flux density ($J_r$), the coercivity ($_JH_C$) and the maximum magnetic energy product $(BH)_{max}$. The results are shown in Table 1.

Table 1

| Parameter<br><br>Sample | Saturation magnetic flux density $(J_s)$ | | Residual magnetic flux density $(J_r)$ | | Coercivity $(_jHc)$ | | Maximum magnetic energy product $(BH)_{max}$ | |
|---|---|---|---|---|---|---|---|---|
| | T | KGs | T | KGs | A/m | kOe | T·A/m | MGOe |
| Sample 1 | 1.34 | 13.4 | 0.90 | 9.0 | $3.4 \times 10^5$ | 4.3 | $0.70 \times 10^5$ | 9.0 |
| Sample 2 | 1.45 | 14.5 | 1.09 | 10.9 | $4.9 \times 10^5$ | 6.1 | $1.07 \times 10^5$ | 13.4 |
| Sample 3 | 1.49 | 14.9 | 1.07 | 10.7 | $4.9 \times 10^5$ | 6.1 | $1.21 \times 10^5$ | 15.2 |
| Sample 4 | 1.40 | 14.0 | 0.99 | 9.9 | $4.2 \times 10^5$ | 5.3 | $1.00 \times 10^5$ | 12.6 |
| Sample 5 | 1.44 | 14.4 | 0.98 | 9.8 | $3.9 \times 10^5$ | 4.9 | $0.76 \times 10^5$ | 9.5 |

It can be seen from Table 1 that Samples 2, 3 and 4, for which the heat treatment was carried out at 650°C, 700°C and 750°C respectively, each exhibit good values for all of the saturation magnetic flux density, the residual magnetic flux density, the coercivity and the maximum magnetic energy product.

On the other hand, the magnetic properties for Sample 1, for which the heat treatment was carried out at 600°C, are strikingly poor, with the maximum magnetic energy product being approximately $0.7 \times 10^5$ T·A/m (9 MGOe). Moreover, the magnetic properties for Sample 5, for which the heat treatment was carried out at 800°C, are somewhat poorer than for Samples 2 to 4, with the maximum magnetic energy product being approximately $0.76 \times 10^5$ T·A/m (9.5 MGOe).

It can be seen from the results of the magnetic properties for Samples 1 to 5 that the temperature range for the heat treatment should be 640 to 750°C, preferably 650 to 740°C, more preferably 660 to 730°C, that the magnetic properties are best when the heat treatment is carried out at around 700°C, and that there is a strikingly large drop in the magnetic properties when the heat treatment is carried out at a temperature below 640°C, while the magnetic properties also drop out of an acceptable range when the heat treatment is carried out at a temperature above 750°C.

(Example 2)

Nd, Fe, Nb, Fe-B and Fe-C were used as raw materials, with these raw materials being weighed out such that the alloy composition would become $Nd_9Fe_{85.5}Nb_{1.0}B_{4.5}$, $Nd_9Fe_{85.5}Nb_{1.0}B_{4.4}C_{0.1}$, $Nd_9Fe_{85.5}Nb_{1.0}B_{4.0}C_{0.5}$, $Nd_9Fe_{85.5}Nb_{1.0}B_{3.0}C_{1.5}$, $Nd_{15}Fe_{77}B_{8.0}$ or $Nd_9Fe_{86.5}B_{4.0}C_{0.5}$. Ribbon-like quenching-solidified bodies of thickness approximately 30μm were then produced for each of these 6 compositions using the same method as for Example 1.

The quenching-solidified bodies were kept at 700°C for 15 minutes in a vacuum furnace at a reduced pressure of $5.0 \times 10^{-3}$ to $1.0 \times 10^{-4}$ Pa and then cooled to room temperature, thus producing Samples 3 and 6 to 10 shown in Table 2.

Magnetic properties were then evaluated for each sample using a VSM (vibrating sample magnetometer). The magnetic properties evaluated were the residual magnetic flux density $(J_r)$, the coercivity $(_jH_C)$ and the maximum magnetic energy product $(BH)_{max}$. The results are shown in Table 2.

Table 2

| Parameter\Sample | Alloy composition (at%) | Residual magnetic flux density (Jr) | | Coercivity (jHc) | | Maximum magnetic energy product (BH)max | |
|---|---|---|---|---|---|---|---|
| | | T | KGs | A/m | kOe | T·A/m | MGOe |
| Sample3 | $Nd_9\ Fe_{85.5}Nb_1B_{4.5}$ | 1.07 | 10.7 | $4.9\times10^5$ | 6.1 | $1.21\times10^5$ | 15.2 |
| Sample6 | $Nd_9\ Fe_{85.5}Nb_1B_{4.4}Co_{0.1}$ | 1.04 | 10.4 | $4.0\times10^5$ | 5.0 | $1.12\times10^5$ | 14.1 |
| Sample7 | $Nd_9\ Fe_{85.5}Nb_1B_{4.0}Co_{0.5}$ | 1.02 | 10.2 | $5.3\times10^5$ | 6.6 | $1.11\times10^5$ | 13.9 |
| Sample8 | $Nd_9\ Fe_{85.5}Nb_1B_{3.0}C_{1.5}$ | 0.94 | 9.4 | $4.9\times10^5$ | 6.1 | $0.91\times10^5$ | 11.4 |
| Sample9 | $Nd_{15}Fe_{77.0}B_8$ | 0.61 | 6.1 | $3.7\times10^5$ | 4.6 | $0.29\times10^5$ | 3.7 |
| Sample10 | $Nd_9\ Fe_{86.5}B_{4.0}Co_{0.5}$ | 0.87 | 8.7 | $2.1\times10^5$ | 2.7 | $0.34\times10^5$ | 4.3 |

Comparing Samples 3 and 6 to 8, it can be inferred that the magnetic properties worsen as the amount of C added in place of B is increased, i.e. as the Nd:B ratio is increased above 2. It is thought that this is because surplus Nd combines with Fe or the like, forming a third phase of $Nd_2Fe_{17}$ or the like. However, it can be seen from Sample 7 that if C is present in an amount of about 0.5 at%, then there is actually a slight increase in the coercivity. Moreover, with Sample 8, the coercivity is good, but the other magnetic properties are slightly poorer than with Samples 3, 6 and 7, with the residual magnetic flux density being 0.94T (9.4KGs) and the maximum magnetic energy product being approximately $0.91\times10^5$ T· A/m (11.4 MGOe). It can thus be concluded that it is preferable for the C content to be no more than 0.5 at%, and hence that the Nd:B ratio may be stipulated to be in the range 2:1 to 2.25:1. It has thus been assumed that the Nd:B ratio may be up to 0.25 away from a central value of 2, and so the Nd:B ratio has been stipulated to be in the range 1.75:1 to 2.25:1.

Comparing Samples 7 and 10, it can be seen that adding 1 at% of Nb results in large improvements in the residual magnetic flux density, the coercivity and the maximum magnetic energy product, thus verifying the effects of adding a fourth element as described earlier.

Sample 9 has the lowest maximum magnetic energy product out of Samples 3 and 6 to 10. This is because Sample 9 is a conventional Nd-Fe-B alloy, having a Nd-rich composition that does not fall within the compositional range for the alloy for a high-performance rare earth permanent magnet of the present application, and moreover not having a fourth element added. In other words, it is because the metallographic structure of Sample 9 is not an $\alpha$-Fe + $Nd_2Fe_{14}B$ two-phase (or approximately two-phase) structure like the other Samples, but rather an $\alpha$-Fe + $Nd_2Fe_{17}$ + $Nd_2Fe_{14}B$ completely three-phase structure.

(Example 3)

Nd, Fe, Nb, Fe-B and Fe-C were used as raw materials, with these raw materials being weighed out such that the alloy composition would become $Nd_9Fe_{85.5}Nb_{1.0}B_{4.0}C_{0.5}$. Four ribbon-like quenching-solidified bodies of thickness approximately 30μm were then produced using the same method as for Example 1.

These quenching-solidified bodies were kept at 700°C for a prescribed time (5 minutes for Sample 11, 15 minutes for Sample 12, 20 minutes for Sample 13, and 30 minutes for Sample 14) in a vacuum furnace at a reduced pressure of $5.0\times10^{-3}$ to $1.0\times10^{-4}$ Pa and then cooled to room temperature, thus producing Samples 11 to 14.

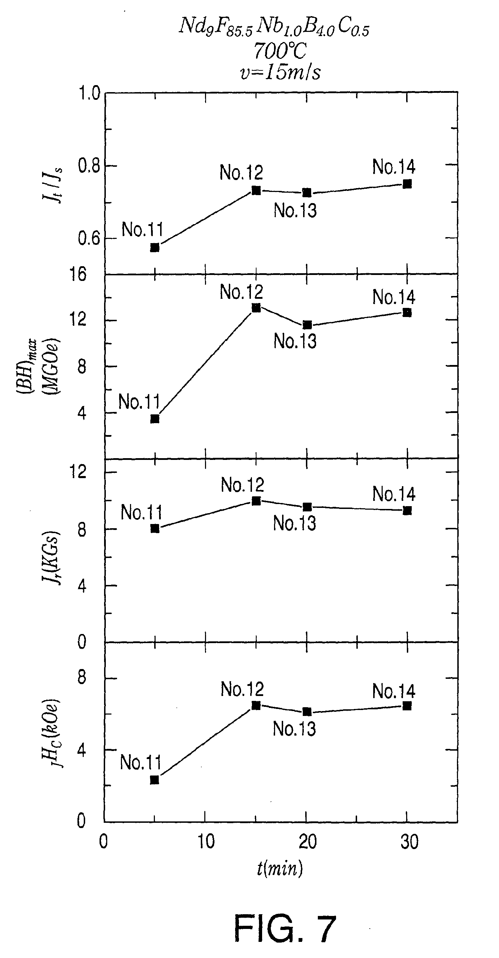

Using these Samples, the effect of the heat treatment time on magnetic properties was then evaluated. The magnetic properties evaluated were the ratio of the residual magnetic flux density to the saturation magnetic flux density $(J_r/J_s)$, the maximum magnetic energy product $(BH)_{max}$, the residual magnetic flux density $(J_r)$ and the coercivity $(_jH_C)$. The results are shown in Fig. 7.

It can be seen from Fig. 7 that each of these magnetic properties is improved when the heat treatment time is increased from 5 to 15 minutes. On the other hand, when the heat treatment time is lengthened beyond 15 minutes, there is virtually no further change in the magnetic properties, but rather each of the magnetic properties exhibits a fairly stable value. It is thought that this shows that, after the phase transformation to a two-phase structure has been completed, even if further heat treatment is carried out, the two-phase structure remains stable with no further growth of crystal grains.

Note that embodiments of the present invention are not limited to the above. Moreover, it goes without saying that, in addition to automobile retarders, motors and generators, the present invention can also be applied to various other equipment for which a high-performance magnet having excellent magnetic properties is required.

**Claims**

1. An alloy for a high-performance rare earth permanent magnet, wherein said alloy has a metallographic structure of approximately two phases that comprises a $Nd_2Fe_{14}B$ phase consisting of hard magnetic crystal grains and an $\alpha$-Fe phase consisting of soft magnetic crystal grains, and wherein said metallographic structure has an ultra-thin film that contains a large amount of nonmagnetic metallic elements that have an atomic radius of between the atomic radius of Fe and the atomic radius of Nd, and are difficult to form solid solutions with either Fe or Nd, at each of the crystal grain boundaries between said phases.

2. The alloy for a high-performance rare earth permanent magnet according to claim 1, **characterized in that** said nonmagnetic metallic elements consist of one or two or more elements selected from among Nb, Zr, Ta and Hf, and the thickness of each of said ultra-thin films that contain a large amount of said nonmagnetic metallic elements is 10 to 20 angstroms.

3. The alloy for a high-performance rare earth permanent magnet according to claim 1, **characterized in that** the sizes of the crystal grains in each of said phases are in the range 5 to 100nm, preferably 10 to 40nm.

4. The alloy for a high-performance rare earth permanent magnet according to claim 2, **characterized in that** the sizes of the crystal grains in each of said phases are in the range 5 to 100nm, preferably 10 to 40nm.

5. An alloy for a high-performance rare earth permanent magnet, comprising a $Nd_2Fe_{14}B$ phase consisting of hard magnetic crystal grains and an $\alpha$-Fe phase consisting of soft magnetic crystal grains, wherein the component proportions of said alloy are:

   6.125 to 11.6 (not including 11.6) at% of Nd;
   a total of 0.2 to 1.3 at% of one or more nonmagnetic metallic elements selected from among Nb, Zr, Ta and Hf;
   a total of 4.0 to 5.8 (not including 5.8) at% of B and C, with the amount of C being 0 to 0.5 at%; and
   the remainder Fe;
   and the component ratio of said Nd to said B is in the range 1.75:1 to 2.25:1.

6. The alloy for a high-performance rare earth permanent magnet according to claim 5, **characterized in that** the sizes of the crystal grains in each of said phases are in the range 5 to 100nm, preferably 10 to 40nm.

7. The alloy for a high-performance rare earth permanent magnet according to claim 5, **characterized in that** said nonmagnetic metallic elements consist of Nb only.

8. The alloy for a high-performance rare earth permanent magnet according to claim 6, **characterized in that** said nonmagnetic metallic elements consist of Nb only.

9. An alloy for a high-performance rare earth permanent magnet, comprising a $Nd_2Fe_{14}B$ phase consisting of hard magnetic crystal grains and an $\alpha$-Fe phase consisting of soft magnetic crystal grains, wherein the component proportions of said alloy are:

   7.0 to 11.6 (not including 11.6) at% of Nd;
   0.50 to 1.00 at% of Nb;
   4.0 to 5.8 (not including 5.8) at% of B; and
   the remainder Fe;
   and wherein the component ratio of said Nd to said B is 2:1, and the sizes of the crystal grains in each of said phases are in the range 5 to 100nm, preferably 10 to 40nm.

10. A method of manufacturing an alloy for a high-performance rare earth permanent magnet, comprising a $Nd_2Fe_{14}B$ phase consisting of hard magnetic crystal grains and an $\alpha$-Fe phase consisting of soft magnetic crystal grains, comprising the steps of:

preparing a molten alloy, in which the component proportions are:

6.125 to 11.6 (not including 11.6) at% of Nd;
a total of 0.2 to 1.3 at% of one or more nonmagnetic metallic elements selected from among Nb, Zr, Ta and Hf;
a total of 4.0 to 5.8 (not including 5.8) at% of B and C, with the amount of C being 0 to 0.5 at%; and
the remainder Fe;
and the component ratio of said Nd to said B is in the range 1.75:1 to 2.25:1;
then, quenching said molten alloy at a rate of at least $10^{4\circ}$C/sec to form a quenching-solidified alloy body; and
then, subjecting said quenching-solidified alloy body to heat treatment for at least 13 minutes, preferably at
least 15 minutes, at a temperature of 640 to 750°C, preferably 650 to 740°C, more preferably 660 to 730°C;
whereby an approximately two-phase metallographic structure comprising said $Nd_2Fe_{14}B$ phase and said $\alpha$-Fe phase is produced, and an ultra-thin film containing a large amount of said nonmagnetic metallic elements
is formed at each of the crystal grain boundaries between said phases.

11. The method of manufacturing an alloy for a high-performance rare earth permanent magnet according to claim 10, **characterized in that** said heat treatment is carried out to produce a metallographic structure of approximately two phases comprising said $Nd_2Fe_{14}B$ phase and said $\alpha$-Fe phase, in which the sizes of the crystal grains in each of said phases are in the range 5 to 100nm, preferably 10 to 40nm.

12. A bonded magnet, which is formed by pulverizing an ingot, into a powder, an alloy obtained through the manufacturing method according to claim 10, and then mixing said powder with a resin.

13. A bonded magnet, which is formed by pulverizing an ingot, into a powder, an alloy obtained through the manufacturing method according to claim 11, and then mixing said powder with a resin.

14. Abulkedmagnet, which is formed by pulverizing an ingot, into a powder, an alloy obtained through the manufacturing method according to claim 10, and then subjecting said powder to hot pressing.

15. A bulked magnet, which is formed by pulverizing an ingot, into a powder, an alloy obtained through the manufacturing method according to claim 11, and then subjecting said powder to hot pressing.

16. An anisotropic bulked magnet, which is formed by pulverizing an ingot, into a powder, an alloy obtained through the manufacturing method according to claim 10, and then molding said powder using a die upset method.

17. An anisotropic bulked magnet, which is formed by pulverizing an ingot, into a powder, an alloy obtained through the manufacturing method according to claim 11, and then molding said powder using a die upset method.

$\alpha Fe$
2

1
$Nd_2Fe_{14}B$

3
ULTRA-THIN FILM

# FIG. 1

$\alpha Fe$
82

$Nd_2Fe_{14}B$
81

80
AMORPHOUS PHASE

# FIG. 8

**FIG. 2**

FIG. 3

FIG. 4

FIG. 5

100nm

FIG. 6

$$Nd_9F_{85.5}Nb_{1.0}B_{4.0}C_{0.5}$$
$$700°C$$
$$v=15m/s$$

FIG. 7